# EUROPEAN PATENT APPLICATION

(11) **EP 4 717 378 A1**
(43) Date of publication of application: **01.04.2026**
(21) Application number: 25203880.7
(22) Date of filing: 23.09.2025
(51) Int. Cl.: B22F 10/50, B22F 10/85, B29C 64/393, B33Y 10/00, B33Y 30/00, B33Y 50/02, B22F 12/17, B22F 10/80, B33Y 50/00

(54) **THREE-DIMENSIONAL SHAPING APPARATUS**

(30) Priority: 27.09.2024 JP 2024168077
(71) Applicant: Matsuura Machinery Corporation, Fukui City, Fukui 910-8530 (JP)
(72) Inventor: IWAO, Shota, Fukui-city, 910-8530 (JP); TANAKA, Ryuzo, Fukui-city, 910-8530 (JP); SHIBATA, Takashi, Fukui-city, 910-8530 (JP)
(74) Representative: Wenzel Nemetzade Warthmüller Patentanwälte Part mbB

(57) **Abstract**

An object is to improve the shaping accuracy in three-dimensional shaping that forms a three-dimensional shaped object by repeating a formation process of fusing powder and solidifying the fused powder and a cutting process. A three-dimensional shaping apparatus of a powder bed system irradiates metal powder with laser to fuse the powder, solidifies the fused powder to form a thin layer, and stacks the formed thin layers to achieve three-dimensional shaping. The three-dimensional shaping apparatus cuts layers that have been formed every time a predetermined number of layers, for example, ten layers, are formed, with a view to improving the shaping accuracy of a shaped object. A shape S3, which is obtained by reflecting a displacement d1 between a target shape S1 to be obtained and a shape S2 including prediction of a deformation by a simulation, onto the target shape S1, is used as cutting data that defines a shape to be cut. A shape S5, which is obtained by reflecting a displacement d2 between the shape S1 and a shape including prediction of a further deformation, onto the shape S3, may be used as the cutting data. Performing the shaping and the cutting by using the cutting data generated based on the prediction of a deformation as described above improves the shaping accuracy of the shaped object.

## Description

### Technical Field

The present disclosure relates to a technique of improving the shaping accuracy in three-dimensional shaping that repeats a formation process of fusing powder by laser, electron beam or the like and solidifying the fused powder and a cutting process, so as to form a three-dimensional shaped object.

### Background Art

Additive manufacturing that fuses powder by laser, electron beam or the like and solidifies the fused powder has been known as one of three-dimensional shaping techniques. This technique includes a variety of known methods, for example, a PDF (powder bed fusion) system and a DED (directed energy deposition) system. In this three-dimensional shaping, however, a deformation may occur in a shaped object due to heating for fusing and a residual stress caused by the effect of cooling in the solidification process. There is accordingly a demand for improving the shaping accuracy.

For example, PTL 1 discloses a technique of repeatedly performing formation of thin layers and cutting of formed layers in the process of stacking thin layers to form a structure. PTL 2 discloses a technique of expecting a distortion caused by a residual thermal stress in the process of forming a stacked boy, forming respective layers to be larger than expected dimensions, and forming a protruded part from a target shape of a shaped object to have a low strength and to be readily cut out. The repetition of the formation and the cutting aims to improve the accuracy of three-dimensional shaping.

### Citation List

### Patent Literature

PTL 1: Japanese Patent No. 2020-82179A
PTL 2: Japanese Patent No. 2022-55792A

### Summary

### Technical Problem

Even in the case of the configuration of repeating the formation and the cutting, the shaping accuracy is not maintained when a layer finished by cutting is deformed by a thermal stress after the cutting. In the case of the configuration of performing the cutting after waiting until no deformation occurs in respective layers by a thermal stress, on the other hand, there is another problem of increasing the shaping time. These problems are common to the case of additive shaping, irrespective of a method of stacking thin layers.

By taking into account the problems described above, an object of the present disclosure is to improve the shaping accuracy with reducing an increase in a shaping time.

### Solution to Problem

According to one aspect of the present disclosure, there is provided a three-dimensional shaping apparatus configured to form a three-dimensional shaped object. The three-dimensional shaping apparatus comprises: an input unit configured to read shape data of the shaped object; a formation portion configured to fuse powder, to solidify the fused powder, and to form a part of the shaped object according to the shape data; a moving mechanism configured to move the part and the shaped object relative to each other, in order to form a next part in addition to a previously formed part; a cutting portion configured to cut the previously formed part; and a controller configured to control the formation portion, the moving mechanism and the cutting portion, such as to repeatedly perform the formation by the formation portion and the moving mechanism and the cutting by the cutting portion and to form the shaped object, wherein the controller predicts a deformation occurring in the part after the cutting by a stress accompanied with the formation and controls the cutting, based on cutting data that is corrected to be suitable for the shape data with the predicted deformation.

The three-dimensional shaping apparatus according to the above aspect of the present disclosure repeatedly performs the formation based on the shape data set without taking into account a possible deformation occurring in the formation process and the cutting, so as to form a three-dimensional shaped object. Cutting may be performed with a correction made to the shape of the shaped object based on a deformation occurring by a stress in the formation process. Even when the shaped object after cutting has a shape different from the target shape, the occurrence of a subsequent deformation provides the target shape of the shaped object.

The configuration according to this aspect of the present disclosure enables the cutting to be performed such as to provide the target shape of the shape object without waiting until no deformation occurs in the formed part of the shaped object. This configuration accordingly improves the shaping accuracy with reducing an increase in a shaping time.

In three-dimensional shaping, one employable method may perform cutting after completion of all the formation processes and finish the shaped object to have a target shape. This method, however, requires a time period for cutting and disadvantageously increases the load applied to a tool. Furthermore, a general tool may fail to cut the part after formation, depending on the shape of the shaped object, for example, a a deep grooved part. The configuration of the present disclosure, on the other hand, performs cutting in the formation process and thus advantageously avoids this problem.

The configuration of the present disclosure is applicable to a variety of three-dimensional shaping methods by fusing powder and solidifying the fused powder, for example, a PDF (powder bed fusion) system or a DED (directed energy deposition) system.

The formation and the cutting may be performed at any arbitrary timing. For example, the cutting may be performed after repetition of a predetermined number of formation processes.

According to the present disclosure, the three-dimensional shaping apparatus may be configured to generate the cutting data or may be configured to read the cutting data generated by an operator. Furthermore, the cutting data may be generated by an apparatus other than the three-dimensional shaping apparatus.

The three-dimensional shaping apparatus according to the above aspect of the present disclosure may further comprise a cutting data generator configured to predict a deformation caused by the stress by performing a simulation and to generate the cutting data with reflection of a result of the prediction on the shape data.

The configuration of predicting a deformation by a stress in the target shape of the shaped object and using a shape with reflection of a deformation in an opposite direction to the predicted direction as the cutting data provides the target shape of the shaped object as a result of the deformation. There is, however, no necessity to directly reflect a deformation obtained by the prediction, but the deformation after an operation of, for example, multiplication by a weight coefficient, may be reflected.

Any of various known methods may be applied to the simulation that predicts a deformation.

The cutting data generator may be provided in the three-dimensional shaping apparatus or may be provided in an apparatus, such as a server, separate from the three-dimensional shaping apparatus. The same applies to the aspects described below.

In the three-dimensional shaping apparatus of the above aspect configured to perform the simulation, the cutting data generator may predict a deformation in the cutting data by performing the simulation and may update the cutting data with reflection of a difference between a shape after the deformation and the shape data.

Even when the cutting data is set with reflection of the predicted deformation, the target shape of the shaped object may not be accurately provided after the deformation, due to a variety of error factors. The configuration of the above aspect predicts the deformation, based on the cutting data, and, in the case of a failure in providing the target shape of the shaped object, sets the cutting data with reflection of a difference from the target shape. This configuration enables the target shape of the shaped object to be provided with the high accuracy after the deformation.

The update of the cutting data based on the prediction of the deformation may be performed only once or may be performed repeatedly twice or more times. For example, the update may be repeatedly performed until the difference between the shape after the deformation and the target shape of the shaped object is converted into a predetermined range.

The three-dimensional shaping apparatus according to the above aspect of the present disclosure may not perform the simulation but may further comprise a cutting data generator configured to predict a deformation caused by the stress, based on a database that stores data of each past shaped object and a deformation occurring by the stress in each past shaped object and to generate the cutting data with reflection of a result of the prediction on the shape data.

For example, an employable method may form a shaped object without prediction of a deformation, actually measure a deformation occurring in the shaped object by a three-dimensional measurement device or the like, and generate the cutting data such as to cancel out the deformation.

This configuration predicts the deformation based on the past data with regard to the deformations occurring in the past shaped objects and thereby enables the cutting data to be set with the high accuracy. This configuration also generates the cutting data with the less load, compared with the simulation.

The method of utilizing the past data may predict a deformation by a statistical technique or by machine learning.

In the three-dimensional shaping apparatus according to the above aspect of the present disclosure, the controller may control the cutting portion to perform the cutting with excluding a part formed by a predetermined number of formation processes repeatedly performed by the formation portion and the moving mechanism from a last formation process.

The part formed by a last formation process is likely to be affected by the heat in a subsequent process of newly forming a thin layer. Cutting this part is thus likely to have an unexpected deformation by the effect of the new heat application. The configuration of the above aspect, on the other hand, performs the cutting with exclusion of last several formation processes and thereby avoids the possible effect of the new heat application.

The processes to be excluded may be determined arbitrarily according to the three-dimensional shaping method or the shaped object.

In the three-dimensional shaping apparatus according to the above aspect of the present disclosure, the cutting portion may use a tool in a lollipop shape.

The tool in the lollipop shape has a blade in a spherical shape that is formed on a leading end of a shaft and that has a larger diameter than a diameter of the shaft. Even in the case where part of a shaped object is protruded, the tool in the lollipop shape performs cutting with avoiding interference with the protruded part. This accordingly improves the accuracy of cutting for a variety of shaped objects.

The lollipop shape is especially useful when cutting is performed with exclusion of several formation processes from a last formation process in the case of shaping by stacking thin layers. In such cases, in the state that thin layers formed by several formation processes, which are not an object to be cut, are protruded, underneath layers are to be cut. The tool in the lollipop shape enables cutting to be performed readily with avoiding interference with the protruded layers.

In the three-dimensional shaping apparatus according to the above aspect of the present disclosure, the formation portion may comprise a mechanism configured to: fuse the powder on the base plate where the shaped object is to be placed; to solidify the fused powder; and to form a thin layer as a part of the shaped object. The three-dimensional shaping apparatus of the above aspect may further comprise a heater configured to heat the base plate, wherein the controller may control heating by the heater, such that a warpage of the base plate caused by the formation is equal to or less than a predetermined request value.

In the case of shaping by stacking thin layers on the base plate, there may be a warpage of the base plate, and this may result in lowering the accuracy of the shaped object. The configuration of the above aspect, however, appropriately heats the base plate by using the heater, so as to suppress a warpage occurring in the base plate and a distortion occurring in the shaped object.

The configuration of the above aspect may be applied to cause a warpage or another amount of deformation of a shaped object separated from the base plate after shaping to be equal to or less than a request value.

In the three-dimensional shaping apparatus of the above aspect, heating by the heater may be controlled by any of various methods.

For example, heating conditions may be set to provide a warpage equal to or less than a predetermined value, based on past shaping data. In another example, the heating conditions may be set, based on a warpage of the base plate determined by a simulation. In the case where an analysis is performed with taking into account a deformation of the base plate in a simulation that predicts a deformation of a shaped object, the result of the analysis may be used.

The warpage of the base plate is significantly correlated to the heating conditions of the heater and to the contact area between the base plate and the shaped object. According to a modification, these correlations may be expressed in advance in the form of functions, maps or tables, and the heating conditions of the heater that cause the warpage to be equal to or less than the request value may be determined, based on such correlations. Not only the contact area of the shaped object but other parameters representing the height, the size or the shape of the shaped object may further be taken into account.

According to another modification, the base plate may be provided with a distortion sensor or another sensor configured to detect a deformation, and heating by the heater may be subjected to feedback control, such that a warpage detected by the sensor becomes equal to or less than a request value.

In the three-dimensional shaping apparatus according to the above aspect of the present disclosure, the controller may set a cutting height range in a stacking direction of the thin layers, according to a set temperature of the heater and an area of the thin layer adjacent to the base plate.

In the case of stacking thin layers, uneven end faces of the thin layers may provide a rough end face of a shaped object. Cutting reduces the roughness of the end face of the shaped object and improves the surface quality. In order to improve the surface quality of the end face, however, it is preferable to perform cutting with taking into account a deformation occurring in the thin layer in the formation process as well as effects of heat and effects of a deformation from the thin layers that are subsequently stacked.

The deformation of a thin layer includes the case of mainly causing a contraction from the formed thin layer and the case of mainly causing an expansion. In the case of mainly causing a contraction, contraction of a thin layer after cutting is likely to fail in maintaining a target shape to be formed. It is thus preferable to perform cutting in a range that is expected to cause no contraction in a subsequent formation process. In the case of mainly causing an expansion, on the other hand, a cut thin layer may further have an expansion in a subsequent formation process. In some cases, it may thus be preferable to perform cutting again with regard to a thin layer that has been cut.

It has been found that the tendency of such deformation is affected by, for example, the temperature of the heater configured to heat the base plate and the area of the thin layer that is adjacent to the base plate. The configuration of the above aspect sets the cutting height range in the stacking direction according to these parameters and can thus improve the surface quality according to the tendency of the deformation occurring in the thin layers.

The cutting height range may be set by any of various methods.

For example, in the case where a deformation in a contraction tendency is expected to occur, based on the parameters, such as the temperature of the heater, the cutting height range may be a lower side apart by a predetermined interval from an uppermost surface of existing thin layers.

In the case where a deformation in an expansion tendency is expected to occur, on the other hand, the cutting height range may be a predetermined range from the uppermost surface including layers that have been cut.

The three-dimensional shaping apparatus may not necessarily be provided with all the variety of features described above as the aspects of the present disclosure, and these features may be partly omitted or combined appropriately.

The present disclosure may be implemented by various aspects, other than the aspects of the three-dimensional shaping apparatus described above.

For example, according to one aspect of the present disclosure, there is provided a three-dimensional shaping method of forming a three-dimensional shaped object by a three-dimensional shaping apparatus. The three-dimensional shaping method comprises steps of: (a) reading shape data of the shaped object; (b) fusing powder, solidifying the fused powder, and forming a part of the shaped object according to the shape data; (c) repeatedly performing the step (b) to form a next part in addition to a previously formed part; and (d) cutting the previously formed part, wherein the step (d) comprises predicting a deformation occurring in the part after the cutting by a stress accompanied with the formation and performing the cutting, based on cutting data that is corrected to be suitable for the shape data with the predicted deformation.

The three-dimensional shaping method of the above aspect has similar advantageous effects to those described above with regard to the three-dimensional shaping apparatus. The variety of features described above as the various aspects of the three-dimensional shaping apparatus are also applicable to the three-dimensional shaping method.

The present disclosure may be implemented by a computer program that causes a computer to control the three-dimensional shaping apparatus. The present disclosure may also be implemented by a computer program that causes the computer to generate the cutting data as a primary part of the control of the three-dimensional shaping apparatus.

According to another aspect of the present disclosure, there is provided a computer program that causes a computer to generate data for cutting to be used for a three-dimensional shaping apparatus, which is configured to form a three-dimensional shaped object by repeatedly performing formation of a part of the shaped object, which fuses powder and solidifies the fused powder, and cutting of a previously formed part. The computer program causes the computer to perform a function of reading shape data of the shaped object; and a function of predicting a deformation occurring in the part after the cutting by a stress accompanied with the formation and of generating cutting data that is corrected to be suitable for the shape data with the predicted deformation.

According to another aspect of the present disclosure, there is provided a computer program that causes a computer to generate data for cutting to be used for a three-dimensional shaping apparatus, which is configured to form a three-dimensional shaped object by repeatedly performing formation of a part of the shaped object, which fuses powder and solidifies the fused powder, and cutting of a previously formed part. The computer program causes the computer to perform: a function of reading shape data of the shaped object; and a function of predicting a deformation caused by a stress, based on a database that stores data of each past shaped object and a deformation occurring by the stress in each past shaped object and generating the cutting data with reflection of a result of the prediction on the shape data

### Brief Description of Drawing

Fig. 1 is an explanatory diagram schematically illustrating the configuration of a three-dimensional shaping apparatus according to one embodiment;
Fig. 2 is an explanatory diagram illustrating a shaping process according to the embodiment;
Fig. 3 is explanatory diagrams illustrating an example of a tool geometry of a cutting portion;
Fig. 4 is a flowchart showing a shaping process;
Fig. 5 is an explanatory diagram showing the setting of a heater temperature;
Fig. 6 is explanatory diagrams illustrating a method of generating cutting data;
Fig. 7 is a flowchart showing a cutting data generation process;
Fig. 8 is explanatory diagrams illustrating deformations occurring in respective layers;
Fig. 9 is explanatory diagrams illustrating a method of setting a cutting height range in the case of a contraction tendency;
Fig. 10 is explanatory diagrams illustrating a method of setting the cutting height range in the case of an expansion tendency;
Fig. 11 is explanatory diagrams showing the results of improvement of the accuracy; and
Fig. 12 is explanatory diagrams showing the results of improvement of the surface quality.

### Description of Embodiments

An example of shaping by a powder bed fusion system is described as an embodiment of the present disclosure. The present disclosure is, however, applicable to not only this system but a variety of other shaping techniques of fusing and solidifying powder, such as a DED (directed energy deposition) system.

### A. Configuration of Apparatus

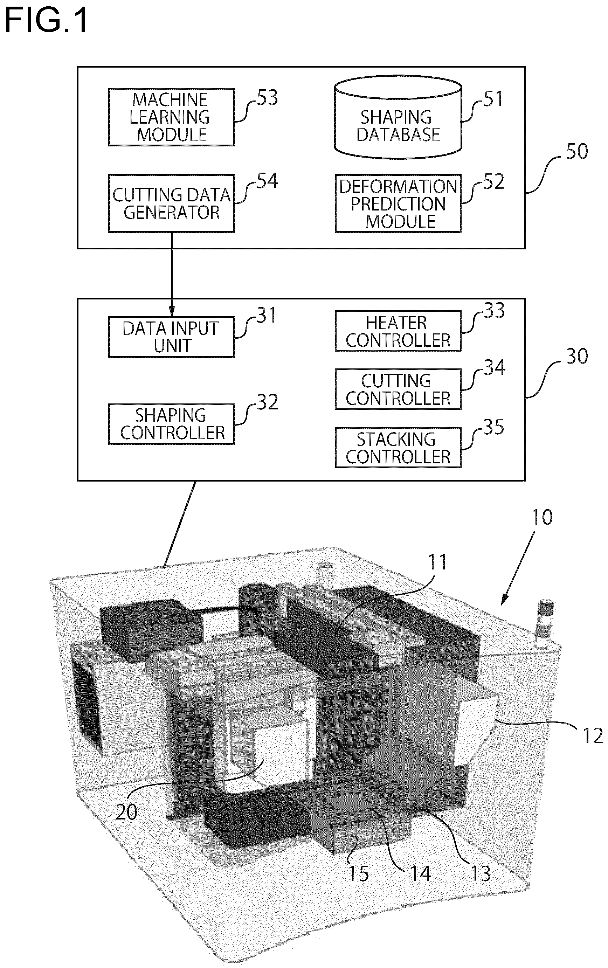

Fig. 1 is an explanatory diagram schematically illustrating the configuration of a three-dimensional shaping apparatus according to one embodiment.

A three-dimensional shaping apparatus 10 of the embodiment includes a shaping table 14 configured to form a shaped object and a recoater 13 configured to move back and forth on the shaping table 14. A basal plate called base plate is placed on the shaping table 14, and shaping is performed on the base plate. Metal powder as a raw material of the shaped object is accumulated in a hopper 12. When the recoater 13 moves back and forth in a shaping process, the surface of the base plate is covered with the metal powder used for shaping to a substantially uniform thickness.

The three-dimensional shaping apparatus 10 is provided with a laser irradiation portion 11 as a mechanism of heating and fusing this metal powder. The laser irradiation portion 11 includes a laser light source and a mechanism configured to move an irradiation location of the laser light source according to the shape of the shaped object. The metal powder is fused in the location irradiated with laser by the laser irradiation portion 11 and is subsequently solidified when being cooled down, so as to form a thin layer that configures part of the shaped object. The portions described above may be collectively called the formation portion in terms of the configuration for formation of the thin layer.

The three-dimensional shaping apparatus 10 is also provided with a moving mechanism 15 configured to move the shaping table 14 downward. After formation of the thin layer, the shaping table 14 is moved down by the thickness of one layer. A next layer is then stacked on the previously formed thin layer by performing the spray of the metal by the recoater 13 and the fusion and the solidification by the laser irradiation portion 11.

The three-dimensional shaping apparatus 10 of the embodiment thus enables a three-dimensional shaped objected to be formed on the base plate by forming the thin layer and repeatedly stacking the layers as described above.

The three-dimensional shaping apparatus 10 of the embodiment alternately and repeatedly performs formation of a thin layer and cutting for the purpose of improving the accuracy. The three-dimensional shaping apparatus 10 is further provided with a cutting portion 20 as a mechanism for cutting. The cutting portion 20 is retreated as illustrated in the process of forming a thin layer and then moves onto the shaping table 14 to perform cutting in a subsequent cutting process.

The three-dimensional shaping apparatus 10 is further provided with a control device 30 configured to control the formation and the cutting described above. Such controls may be configured by a hardware configuration but are configured by a software configuration that installs computer programs for implementing the functions illustrated in Fig. 1 into a computer provided with a CPU and memories, according to the embodiment.

A data input unit 31 is configured to read shape data of the shaped object. The shape of each of thin layers to be stacked is required in the shaping process, so that the shape data to be read may be shape data of each of the layers configuring the shaped object. According to a modification, the data input unit 31 may read data indicating a three-dimensional shape of the shaped object, and the three-dimensional shaping apparatus 10 may generate shape data with regard to each of the thin layers.

The data input unit 31 is also configured to read cutting data that defines a cutting shape. As described later, the shape data and the cutting data are different from each other according to the embodiment. The shape data is data indicating the shape of a shaped object to be obtained, while the cutting data is data used for cutting that is performed in the shaping process. In the case of three-dimensional shaping using fusion and solidification of the powder, the shaped object may be deformed by a thermal stress. The cutting data is accordingly data that is set to expect a possible deformation after cutting and to achieve the shape to be obtained as a result of such deformation.

The cutting data may be generated by the three-dimensional shaping apparatus 10 but is generated by a cutting data generation device 50 provided separately according to the embodiment. The configuration of the cutting data generation device 50 will be described later.

A stacking controller 35 is configured to control, for example, the supply of the powder by the recoater 13, the laser irradiation by the laser irradiation portion 11, and the move by the moving mechanism 15, so as to form the thin layers.

A cutting controller 34 is configured to control the cutting portion 20 to perform cutting, based on the cutting data in the shaping process.

A heater controller 33 is configured to control a heater provided in the shaping table 14 to achieve an appropriate temperature as the temperature of the shaping table 14. It is known that the temperature of the shaping table 14 affects the warpage of the base plate and thereby the accuracy of the shaped object. The configuration of the embodiment controls the temperature of the shaping table 14 to ensure a sufficient accuracy of the shaped object.

A shaping controller 32 is configured to comprehensively control the heater controller 33, the cutting controller 34 and the stacking controller 35, so as to form the shaped object according to the shape data.

As described above, the configuration of the embodiment repeatedly performs the formation of thin layers and the cutting in the shaping process of the shaped object. The cutting data that defines the shape to be cut may be generated by the three-dimensional shaping apparatus 10 but is generated by the cutting data generation device 50 according to the embodiment.

The cutting data generation device 50 is constructed by a software configuration that installs computer programs for implementing the respective functions illustrated in Fig. 1 into a computer or a server provided with a CPU, memories and the like. These functions may be implemented by one single computer or may be implemented by a plurality of computers or servers connected via a network.

A shaping database 51 is configured to store shaping data that represents past shaping results. The contents of the shaping data may be determined arbitrarily but may include, for example, the shape of a shaped object, cutting data in a shaping process, and the size of a distortion caused in the shaped object. The shape of the shaped object or the cutting data may be configured by a three-dimensional shape or may be represented by a parameter, for example, a thickness in a stacking direction. The size of the distortion may be represented by a parameter, for example, a distortion in the stacking direction or an intralayer distortion.

A machine learning module 53 is configured to use the shaping database 51 and generate a learning model by machine learning regression. The purpose of machine learning is to generate a learning model for setting the cutting data such that a shaped object to be formed in future is to have a shape to be obtained as a result of deformation after cutting. Accordingly machine learning is performed with a shape, a distortion and the like as explanatory variables and with cutting data as an objective variable. The machine learning may be performed according to a variety of algorithms. The generated learning model is stored in the machine learning module 53.

A modified configuration may be provided with a function of setting the cutting data by a statistical technique based on the shaping database 51, in place of the machine learning module 53. For example, one employable technique may use, for example, a planar shape of thin layers and thicknesses of respective locations of a shaped object as parameters and statistically determine distortions occurring in respective three-dimensional directions of the shaped object.

A deformation prediction module 52 serves to predict a possible deformation caused by a thermal stress or a texture change in a shaped object to be formed, by simulation or the like. With regard to the simulation for prediction of the deformation, a variety of methods have been known, so that any appropriate method may be employed.

A cutting data generator 54 generates cutting data by reflecting the result of the machine learning by the machine learning module 53 and the result of the prediction by the deformation prediction module 52, on the shape data of the shaped object. The cutting data generator 54 may selectively use one of the result by the machine learning module 53 and the result by the deformation prediction module 52 according to the shaped object or may use both the results by the machine learning module 53 and by the deformation prediction module 52. The generated cutting data are sent to the control device 30 to be used in the cutting process.

A modification may omit one of the machine learning module 53 and the deformation prediction module 52 and may cause the cutting data generator 54 to generate the cutting data by using only the non-omitted module. Another modification may incorporate the configuration of the cutting data generator 54 into the control device 30.

### B. Three-Dimensional Shaping Process

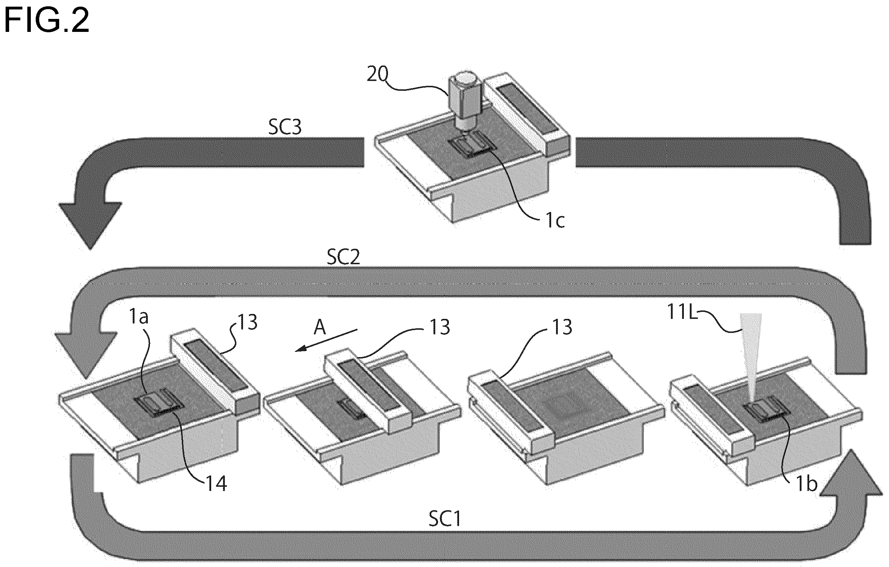

Fig. 2 is an explanatory diagram illustrating the shaping process according to the embodiment. The shaping process of the embodiment repeats formation of thin layers (shown by arrows SC1 and SC2) and performs cutting (shown by an arrow SC3) at a predetermined timing. This process is described below.

Formation of a thin layer (shown by the arrow SC1) is described first. Fig. 2 illustrates the state that a thin layer 1a is formed on the shaping table 14. In this state, the shaping process supplies metal powder with moving the recoater 13 in a direction of an arrow A. The shaping process subsequently irradiates the supplied metal powder with laser 11L to fuse the powder and solidifies the fused powder to form a thin layer 1b. In a resulting state, the thin layer 1b is laid on the thin layer 1a. This process is performed repeatedly several times (shown by the arrow SC2). According to the embodiment, this process is repeated to form ten layers.

The cutting portion 20 is then moved onto a resulting shaped object to cut an existing thin layer 1c (shown by the arrow SC3). After completion of the cutting, the shaping process returns to formation of another thin layer (shown by the arrow SC1).

Three-dimensional shaping is performed by repeating the formation of thin layers and the cutting as described above. According to the embodiment, the cutting is performed every time ten layers are formed. The timing of performing the cutting may, however, be determined arbitrarily.

The shaping process of the embodiment performs the cutting with prediction of a possible deformation of the thin layers (hereinafter this cutting may be referred to as finishing cutting). A modification may additionally perform intermediate cutting, i.e., cutting with margins to a final shape (hereinafter this cutting may be referred to as middle finishing) in the shaping process. In the description below, the cutting means the finishing cutting, unless otherwise described. This, however, does not intend to exclude performing the middle finishing.

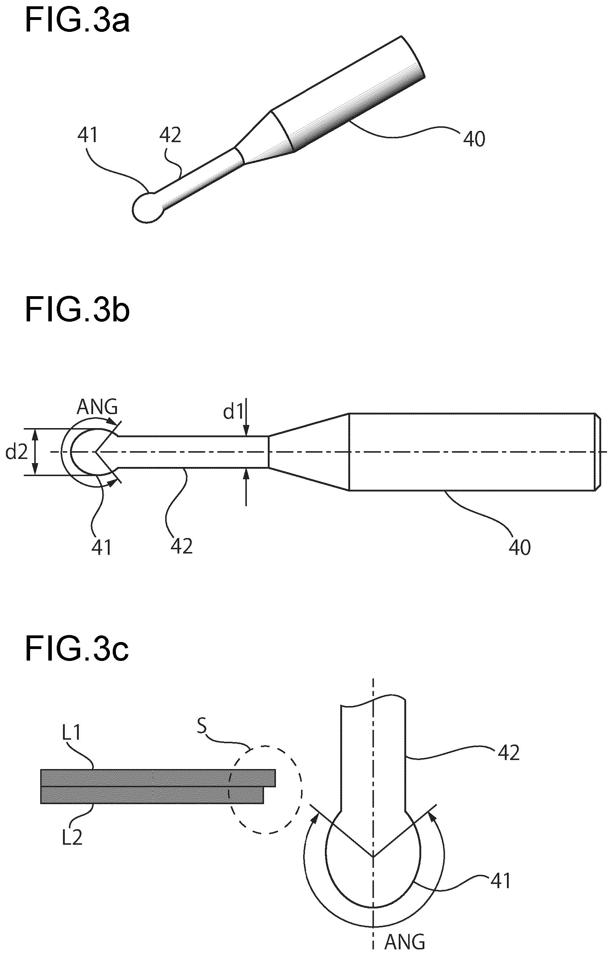

Fig. 3 is explanatory diagrams illustrating an example of a tool geometry of the cutting portion. Fig. 3(a) is a perspective view illustrating a cutting tool 40 attached to the cutting portion 20. As illustrated, the cutting tool 40 has a so-called lollipop shape including a cutting part 41 in a spherical shape formed on a leading end of a shaft 42.

Fig. 3(b) is a side view illustrating the cutting tool 40. The cutting part 41 in the spherical shape has a larger diameter d2 than a diameter d1 of the shaft 42 (d1 < d2). The cutting part 41 has a blade for cutting formed over a range of an angle ANG. The angle ANG may be determined arbitrarily and is 220 degrees according to the embodiment.

Fig. 3(c) schematically illustrates an advantage of the lollipop shape. In the case where thin layers L1 and L2 are formed to be stacked like this embodiment, a layer L1 formed later may be protruded from an existing layer L2 as shown in an area S. When the existing layer L2 is to be cut in this state, in the cutting tool 40 in the lollipop shape, the cutting part 41 is formed over the wide range of the angle ANG and can thus cut the layer L2 with avoiding the interference of the layer L1. The cutting part 41 can also cut only the layer L2 in the state that the layer L1 is not protruded.

The configuration of the embodiment performs the cutting with exclusion of several layers from the top as described later. The cutting tool 40 in the lollipop shape is thus especially useful.

### C. Shaping Process

The following describes a shaping process performed in the three-dimensional shaping apparatus 10 of the embodiment.

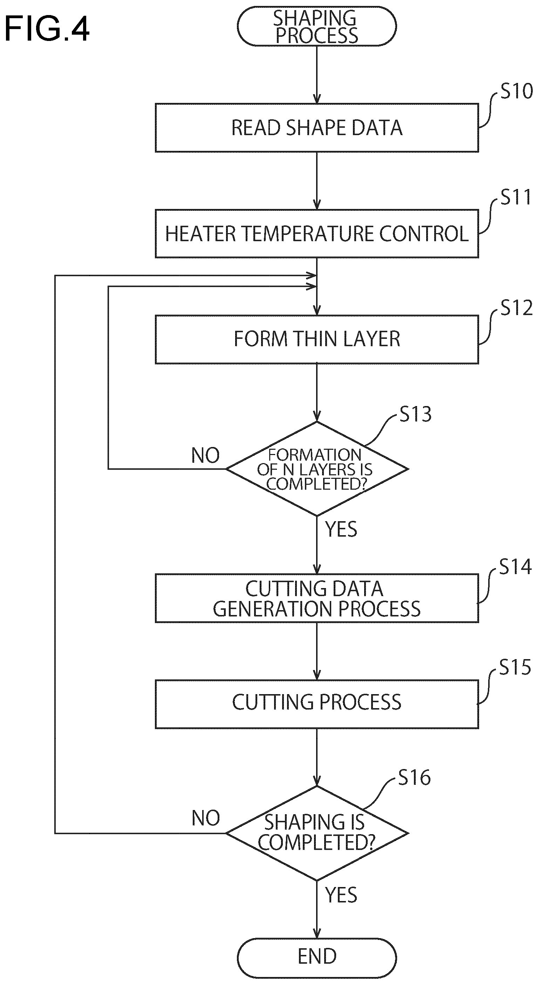

Fig. 4 is a flowchart showing a shaping process. This is the process performed by the control device 30 of the three-dimensional shaping apparatus 10.

At start of the processing, the three-dimensional shaping apparatus 10 first reads shape data of a shaped object (step S10). When the shaped object is configured as a laminated body of thin layers, this shape data is data for defining the shapes of the respective thin layers. When the shape data is three-dimensional data of the shaped object, the three-dimensional shaping apparatus 10 is required to generate shape data of thin layers, based on the three-dimensional data.

The three-dimensional shaping apparatus 10 subsequently performs temperature control of the heater configured to heat the base plate (step S11).

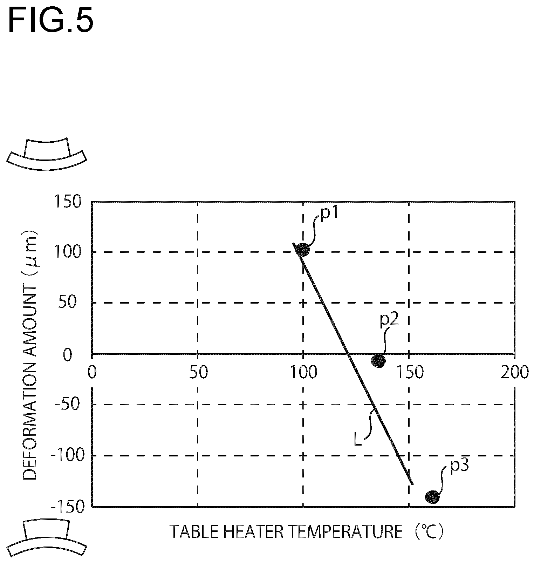

Fig. 5 is an explanatory diagram showing the setting of a heater temperature. The graph shows a heater temperature as abscissa and a deformation amount of the base plate as ordinate. A negative value of the deformation amount shows a concave-down deformation of the base plate, and a positive value of the deformation amount shows a concave-up deformation of the base plate. In the shaping process, a variety of stresses may be applied to the shaped object to be formed, and the base plate may be deformed by the effects of such stresses. The stresses applied to the base plate are affected by the size of the shaped object or more specifically by a contact area between the shaped object and the base plate and the temperature of a table heater used to heat the base plate. Points p1 to p3 in the graph show the measurement results of a deformation amount of a certain shaped object in the case of changing the heater temperature. In this example, a relationship between the heater temperature and the deformation amount is approximately determinable by a straight line L in the graph. Accordingly, the temperature of the heater expected to have a deformation amount of 0 can be determined with regard to this shaped object.

Different shaped objects provide different straight lines L. When the number of measurement points is increased, an approximate curve may be obtained, instead of a straight line. Accordingly, a straight line or an approximate curve is specified, based on identical or similar past shaping results to set the heater temperature.

Referring back to Fig. 4, the heater is controlled to have the temperature set as described above at step S11.

On conclusion of the above processing, the three-dimensional shaping apparatus 10 starts a shaping process. The three-dimensional shaping apparatus 10 first forms a first thin layer (step S12). The method of forming a thin layer irradiates metal powder with laser according to the shape data to fuse the metal powder and then solidifies the fused metal powder as described above with reference to Fig. 2. This process is performed repeatedly until completion of formation of N layers (where N denotes a natural number) (step S13). As described above with reference to Fig. 2, N is equal to 10 according to this embodiment.

After completion of the formation of N layers (step S13), the three-dimensional shaping apparatus 10 performs a cutting data generation process (step S14) and then performs a cutting process or more specifically a process of cutting target layers to be cut, based on the cutting data (step S15). The three-dimensional shaping apparatus 10 repeatedly performs the series of processing described above until completion of shaping (step S16).

The cutting data generation process will be described later. The configuration of the embodiment generates the cutting data in the shaping process. A modification may provide the cutting data at step S10, prior to a start of shaping.

According to the embodiment, the cutting process (S15) excludes a predetermined number of layers from a layer immediately after formation, i.e., from an uppermost layer (hereinafter referred to as "excluded area") and cuts only lower layers below the excluded layers. The excluded area is an upper area and is thus readily affected by heat in the course of stacking a next layer. Even when cutting is performed with high accuracy, the excluded area may be deformed prior to next cutting. As a result, this may cause a level difference in a cutting plane, i.e., in an end face of the shaped object. Increasing the thickness of the excluded area causes a cut part to be hardly affected by the heat in the course of formation of a next layer. Increasing the thickness of the excluded area may, on the other hand, cause the excluded area to be significantly protruded and may have a difficulty in cutting the lower layers below the excluded area, depending on the shape of the shaped object. The excluded area may be determined arbitrarily by taking into account these factors. The method of determination will be described later.

The cutting process may perform the middle finishing, in addition to the finishing cutting.

### D. Method of Generating Cutting Data

The following describes a method of generating the cutting data. This corresponds to the processing at step S14 in the shaping process (shown in Fig. 4).

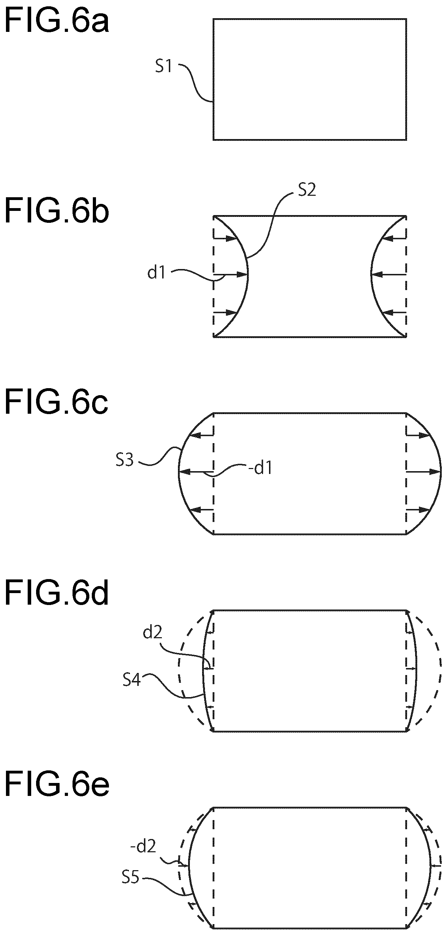

Fig. 6 is explanatory diagrams illustrating a method of generating the cutting data. Fig. 6(a) illustrates one example of a target shape S1 to be obtained of a three-dimensional shaped object.

In the case of three-dimensional shaping by fusion and solidification of powder like the embodiment, a shaped object may be deformed by a thermal stress occurring in the shaping process. Fig. 6(b) illustrates one example of a deformation. In this illustrated example, a shape S2 has a left side wall and a right side wall contracted from the target shape by deformation. There is a displacement d1 from the target shape occurring by the deformation.

This illustrated example schematically shows a deformation only in a left side face and a right side face. The deformation may, however, be caused in various ways according to the shape of the shaped object.

Such deformation is predictable by a simulation. This simulation enables the displacement d1, which may occur by the deformation, to be predicted.

The method accordingly reflects the displacement d1 in an opposite direction (shown as -d1 in Fig. 6(c)) on the target shape S1, so as to obtain a shape S3. When a shaped object is generated according to the shape S3, the shaped object in the shape S1 is expected to be obtained with taking into account a predicted deformation of the displacement d1. From this point of view, the shape S3 may be used as the cutting data.

In the illustrated example, the displacement d1 is directly reflected in the opposite direction. A modification may perform any of various operations, for example, multiplying the displacement d1 by a weight coefficient or performing correction to smoothly vary the displacement d1, before reflecting the displacement d1.

As described above, the shape S3 may be used as the cutting data. The embodiment may, however, further improve the accuracy.

For this purpose, the method performs a simulation for prediction of a deformation with regard to the shape S3. This simulation may successfully provide the shape S1. The displacement d1 occurring in the shape S1 may, however, not be identical with a displacement occurring in the shape S3, so that a displacement d2 from the shape S1 may occur like a shape S4 shown in Fig. 6(d).

In the case of the occurrence of the displacement d2, the method specifies a shape S5 with reflection of the displacement d2 on the shape S3, as cutting data, as shown in Fig. 6(e). Using the shape S5 is more likely to provide the shape S1 with the higher accuracy, compared with using the shape S3.

The method may further repeat a process of performing a simulation for prediction of a deformation with regard to the shape S5 and updating the cutting data with reflection of a displacement between the result of the simulation and the shape S1. Repeating this process until the displacement between the result of the simulation for prediction of the deformation and the shape S1 enters a predetermined range furthermore improves the accuracy of shaping.

The number of repetition of updating the cutting data based on the simulation for prediction of the deformation should be determined according to a target accuracy to be achieved. The cutting data obtained first (the shape S3 in Fig. 6(c)) may accordingly be used.

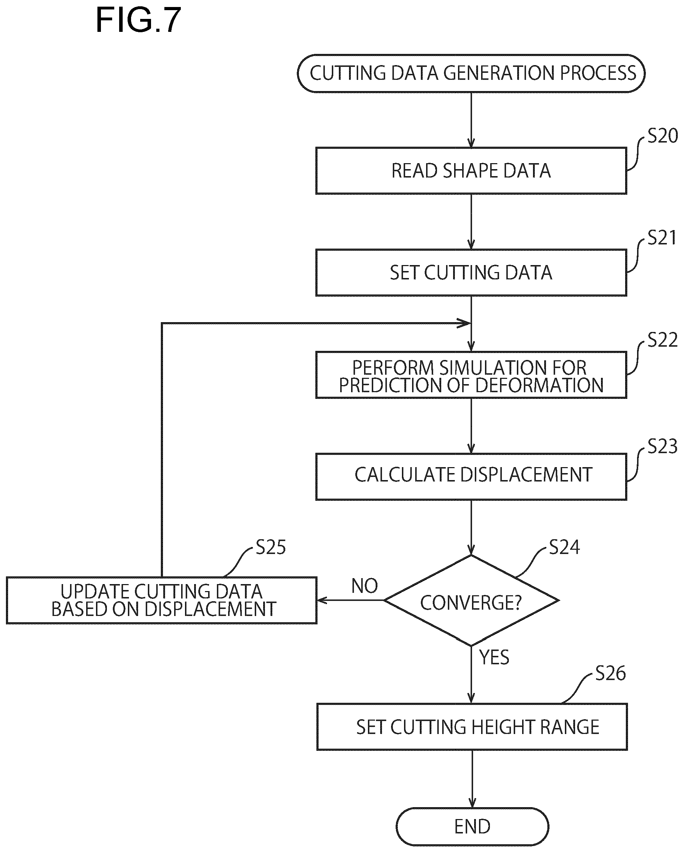

Fig. 7 is a flowchart showing the cutting data generation process. This process is performed by the cutting data generation device 50 (shown in Fig. 1) to generate cutting data, on the basis of the concept described above with reference to Fig. 6.

At start of the processing, the cutting data generation device 50 first reads shape data of a shaped object (step S20) and subsequently sets an initial value of cutting data (step S21). The shape data may be used directly as the initial value.

The cutting data generation device 50 subsequently performs a simulation for prediction of a deformation with regard to a shape represented by the cutting data (step S22) and calculates a displacement from the shape data of the shaped object (step S23). With referring to Fig. 6, this processing corresponds to the process of calculating the displacement d1 based on the result of prediction of the deformation (Fig. 6(b)) with regard to the shape S1 shown in Fig. 6(a).

When the displacement converges, i.e., when the calculated displacement is smaller than a predetermined range that is set in advance (step S24), the cutting data generation device 50 determines that the cutting data is usable for shaping with a sufficient accuracy and terminates the process.

When the displacement does not converge, on the other hand, the cutting data generation device 50 updates the cutting data based on the displacement (step S25). With referring to Fig. 6, this processing corresponds to the process of obtaining the shape S3 with reflection of the displacement d1.

The cutting data generation device 50 then once again performs a simulation for prediction of a deformation (step S22) and calculates a displacement (step S23) with regard to this updated cutting data. With referring to Fig. 6, this processing corresponds to the process of obtaining the shape S4 and the displacement d2 shown in Fig. 6(d).

The cutting data generation device 50 repeatedly performs the above series of processing until the displacement converges to the predetermined range (step S24).

The cutting data generation device 50 also sets a cutting height range (step S26). As described above with regard to the cutting process (step S15 in Fig. 4), the cutting process of the embodiment may not necessarily specify the entirety of the formed thin layers as a cutting object but may provide a certain excluded area. The cutting height range herein denotes a range of the cutting object in the stacking direction. A method of setting the cutting height range will be described later.

The cutting data obtained by the above series of processing is used in the cutting process (step S15 in Fig. 4) performed in the three-dimensional shaping apparatus 10.

According to a modification, the simulation for prediction of the deformation (step S22) and the calculation of the displacement (step S23) in the cutting data generation process may employ a method of utilizing the shaping database 51 (shown in Fig. 1) that stores past shaping results.

More specifically, an employable method may refer to the shaping database 51 and calculate a displacement by machine learning and may generate cutting data with reflection of the displacement by machine learning. Besides this method of using the machine learning, another employable method may calculate a displacement by statistical processing of the shaping database 51 and generate cutting data.

Another employable method may use both a displacement obtained by a simulation for prediction of a deformation and a displacement obtained by machine learning or by statistical processing, for example, to calculate an average thereof and may generate cutting data.

### E. Method of Setting Cutting Height Range

The following describes a method of setting the cutting height range. This is performed in the cutting data generation process (step S26 in Fig. 7). The description first refers to possible deformations occurring in respective layers in the shaping process of stacking thin layers and then refers to the method of setting the cutting height range with taking into account the deformations.

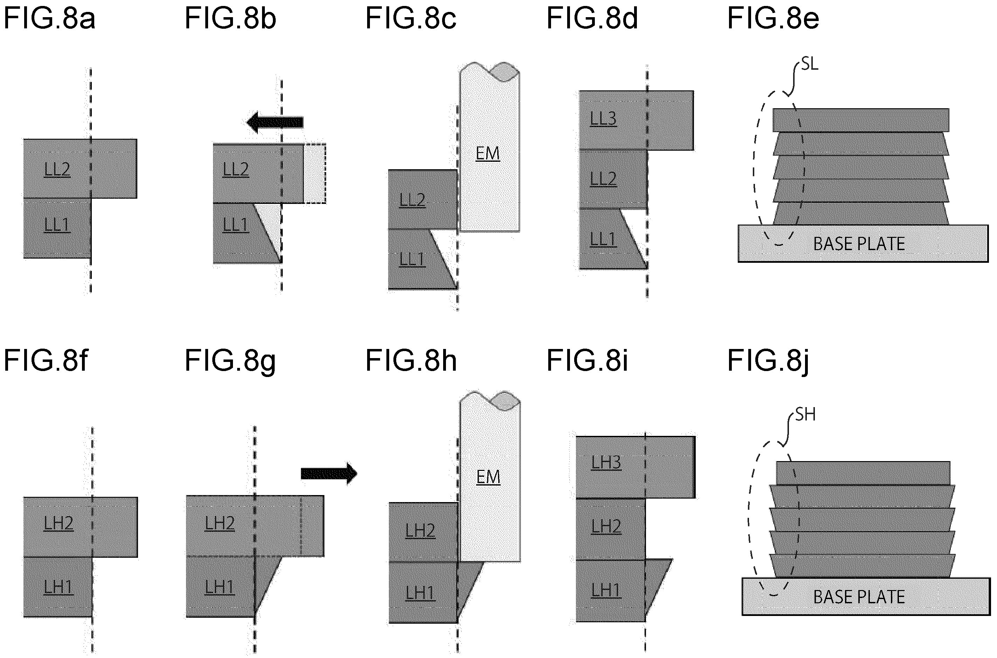

Fig. 8 is explanatory diagrams illustrating deformations occurring in respective layers. The deformations occurring in the respective layers depend on the temperature of the base plate and the like.

Fig. 8(a) to Fig. 8(e) show deformations occurring when the base plate has a relatively low temperature. Fig. 8(a) illustrates the state that a layer LL2 is laid on a previously formed layer LL1. The layer LL1 may be one single thin layer formed by one forming process or may be an area comprised of a plurality of thin layers formed by multiple formation processes. According to this embodiment, the cutting is performed after formation of N layers as described above with regard to steps S12 and S13 in Fig. 4. It is accordingly thought that the N layers form the layer LL1.

When the base plate has a relatively low temperature, after formation of the layer LL2, a contraction may occur in the layer LL2 with elapse of time as shown in Fig. 8(b). This contraction further causes a contraction on an upper face of the layer LL1 and deforms the layer LL1 to a trapezoidal shape having a shorter upper side than a lower side as illustrated. In this state, as shown in Fig. 8(c), an end face of the layer LL2 is cut to a target shape to be obtained (shown by a broken line) by using an end mill EM. A layer LL3 is subsequently formed on the layer LL2 as shown in Fig. 8(d). A contraction then similarly occurs in the layer LL3, and the layer LL2 is deformed to a trapezoidal shape like the state shown in Fig. 8(b).

When the base plate has a relatively low temperature, the repetition of this process causes an end face SL of a shaped object not to be in a flush state but to be in a rough state having a corrugated surface like a stack of downward trapezoids as shown in Fig. 8(e). The surface in such a rough state may be referred to as low surface quality, and the surface in a smooth state may be referred to as high surface quality.

Fig. 8(f) to Fig. 8(j) show deformations occurring when the base plate has a relatively high temperature. Fig. 8(f) illustrates the state that a layer LH2 is laid on a previously formed layer LH1.

When the base plate has a relatively high temperature, after formation of the layer LH2, an expansion occurs in the layer LH2 by martensitic transformation of the tissue of the layer LH2 with elapse of time as shown in Fig. 8(g). An upper face of the layer LH1 is changed, accompanied with the expansion of the layer LH2, and the layer LH1 is deformed to a trapezoidal shape having a longer upper side than a lower side as illustrated. In this state, as shown in Fig. 8(h), an end face of the layer LH2 is cut to a target shape to be obtained (shown by a broken line) by using the end mill EM. A layer LH3 is subsequently formed on the layer LH2 as shown in Fig. 8(i). An expansion then similarly occurs in the layer LH3, and the layer LH2 is deformed to a trapezoidal shape like the state shown in Fig. 8(g).

When the base plate has a relatively high temperature, the repetition of this process causes an end face SH of a shaped object not to be in a flush state but to be in a rough state having a corrugated surface like a stack of upward trapezoids as shown in Fig. 8(j).

The cutting of the end face is performed to suppress the unevenness shown in Fig. 8 and to improve the surface quality. As described above with reference to Fig. 8, the type of deformation occurring in the layers differs, depending on the temperature of the base plate. It is thus preferable to change the method of cutting according to the temperature of the base plate.

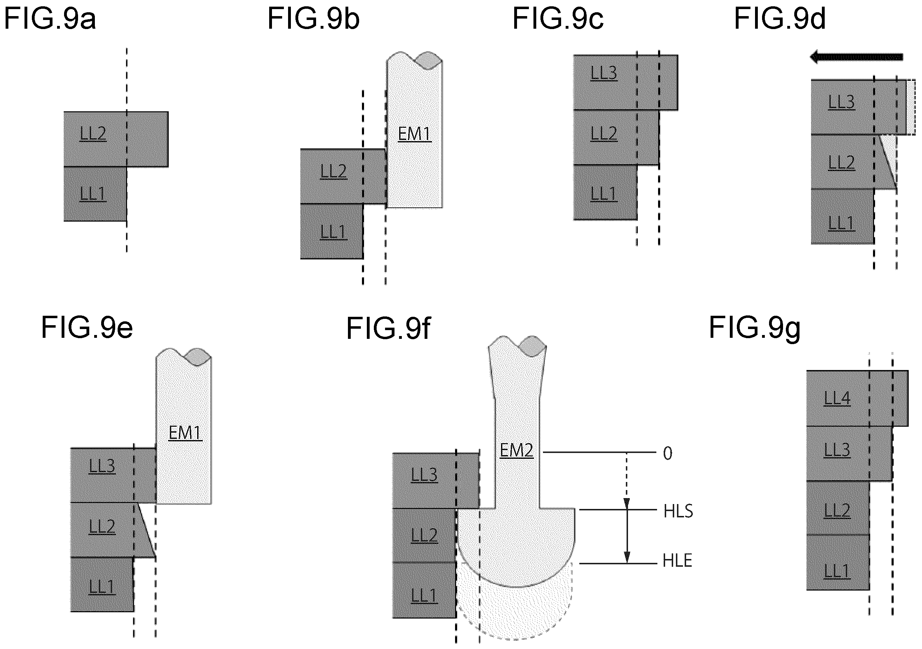

Fig. 9 is explanatory diagrams illustrating a method of setting the cutting height range in the case of a contraction tendency. Fig. 9(a) shows the state that a layer LL2 is laid on a previously formed layer LL1. The layer LL2 is subjected to middle finishing that cuts the end face with the end mill EM as shown in Fig. 9(b). The middle finishing stops the cutting with margins to a final target shape. This reduces a cutting amount in the finishing cutting described later and advantageously reduces an amount of deformation occurring in the layer LL2 due to the contraction. The middle finishing is, however, not an essential process and may be omitted.

When a layer LL3 is formed on and along the layer LL2 as shown in Fig. 9(c), the layer LL3 is contracted and the layer LL2 is deformed accompanied with the contraction as shown in Fig. 9(d). The layer LL3 is then subjected to middle finishing as shown in Fig. 9(e).

The finishing cutting, i.e., the cutting to the target shape, is then performed as shown in Fig. 9(f). In the illustrated example of Fig. 9, a deformation mainly in the contraction tendency occurs in each layer. For example, cutting the presently uppermost layer LL3 is likely to cause a deformation in the layer LL3 in a subsequent formation process and is thus likely to make the layer LL3 smaller than the target shape.

In order to avoid this problem, the finishing cutting is preferably performed with setting an offset by a predetermined height HLS in the stacking direction from the uppermost face as the basis (shown by "0"), as an upper limit. The cutting is also preferably performed with a height HLE reaching a layer that is not affected in a subsequent formation process, as a lower limit. Apart below the height HLE is a part where the finishing cutting has been completed and is accordingly a part that does not require any further finishing cutting. The cutting may, however, be performed for an area including this par.

The cutting may be performed in a downward direction or in an upward direction. In order to perform the cutting with the uppermost layer LL3 being left, the end mill EM2 preferably has a lollipop shape as illustrated.

In the state of Fig. 9(f), the upper limit height HLS of the cutting height range is equal to an upper face of the layer LL2, and the lower limit height HLE is equal to an upper face of the layer LL1. This is, however, only illustrative. For example, the occurrence of a deformation in a subsequent formation process is not necessarily limited to the uppermost layer LL3, but a deformation may occur in the layer LL2 below the uppermost layer LL3. In this case, it is preferable to set the upper limit height HLS at a position below the layer LL2.

Even when the finishing cutting of the layer LL1 has been completed and no subsequent deformation occurs in the layer LL1, the cutting of an area including the layer LL1 is likely to eliminate an unevenness at a boundary between the layer LL1 and the layer LL2. From this point of view, the lower limit height HLE may be set to overlap with a part where the finishing cutting has been completed.

Fig. 9(g) shows the state that a layer LL4 is formed after completion of the finishing cutting. The process of Fig. 9(c) to Fig. 9(f) described above may then be repeatedly performed.

The foregoing describes the finishing cutting in the case of the occurrence of a deformation mainly in the contraction tendency. In the case of the occurrence of a deformation in the contraction tendency, the basic idea is to perform the finishing cutting for layers that substantially have no deformation in a subsequent formation process.

The following describes the finishing cutting in the case of the occurrence of a deformation mainly in the expansion tendency.

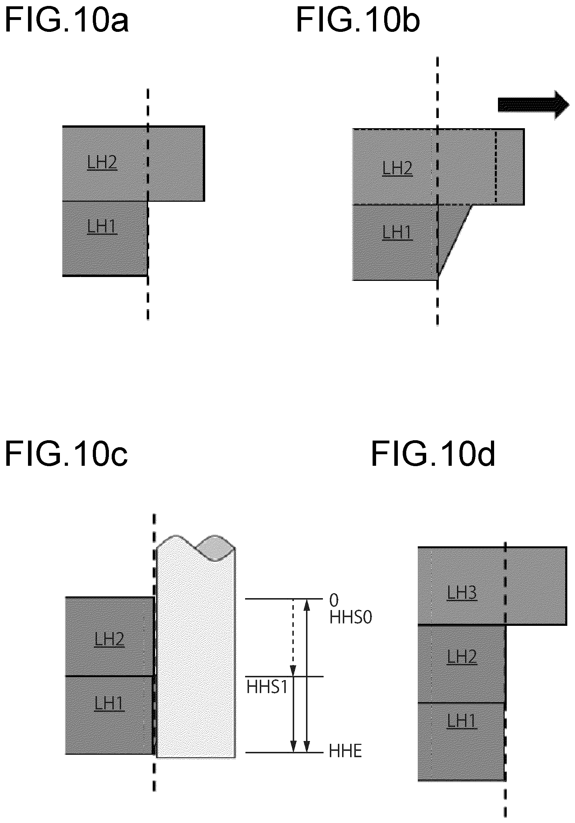

Fig. 10 is explanatory diagrams illustrating a method of setting the cutting height range in the case of an expansion tendency. Fig. 10(a) shows the state that a layer LH2 is laid on a layer LH1. As described previously, when the base plate has a relatively high temperature, the layer LH2 is expanded due to the martensitic transformation, and a deformation occurs in the layer LH1 along with this expansion as shown in Fig. 10(b).

The layer LH1 and the layer LH2 are accordingly subjected to the finishing cutting as shown in Fig. 10(c). The finishing cutting in this case is performed with regard to the entirety of the layers LH1 and LH2. When an uppermost face of the layer LH2 is set as a basis (shown by "0"), an upper limit height HHS0 of the cutting height range may be set equal to the basis. A lower limit height may, on the other hand, be set to a height HHE of a lower face of the layer LH1 that is affected by the deformation.

Fig. 10(d) shows the state that a layer LH3 is additionally formed after completion of the finishing cutting. The process of Fig. 10(b) and Fig. 10(c) described above may then be repeatedly performed.

Fig. 10(c) illustrates the example of the cutting height range with the upper limit height HHS0 and the lower limit height HHE. The cutting height range may, however, have a variety of other settings. For example, in the case where a deformation is expected to occur in the layer LH2 in a subsequent formation process, the cutting height range may be set with exclusion of the layer LH2. In this case, an upper limit height may be set to HHS1 as shown in Fig. 10(c).

Even in the case where no deformation occurs in a layer below the layer LH1 in a formation process of the layer LH2, the lower limit height HHE of the cutting height range may be set to be lower than the layer LH1. This enables the boundary between the layer LH1 and an underneath layer to be further smoothened.

The foregoing describes the finishing cutting in the case of the occurrence of a deformation mainly in the expansion tendency. In the case of the occurrence of a deformation in the expansion tendency, the basic idea is to perform the finishing cutting again even for layers where the finishing cutting has been performed until no deformation occurs in a subsequent formation process.

The cutting height range is set (step S26 in Fig. 7), based on the ideas shown in Fig. 9 and Fig. 10. It is determined whether a deformation is likely to occur in the contraction tendency or in the expansion tendency, for example, based on the heater temperature of the base plate and the contact area between the shaped object and the base plate. This determination may be based on past shaping results stored in a database. In any cases, the upper limit height and the lower limit height are set, based on the ideas described above with reference to Fig. 9 and Fig. 10 by taking into account the extent of the effect of the deformation in a subsequent formation process.

### F. Advantageous Effects and Modifications

The three-dimensional shaping apparatus 10 described in the embodiment and the shaping method based thereon use the cutting data including prediction of deformations and thereby improve the shaping accuracy of a shaped object as described below.

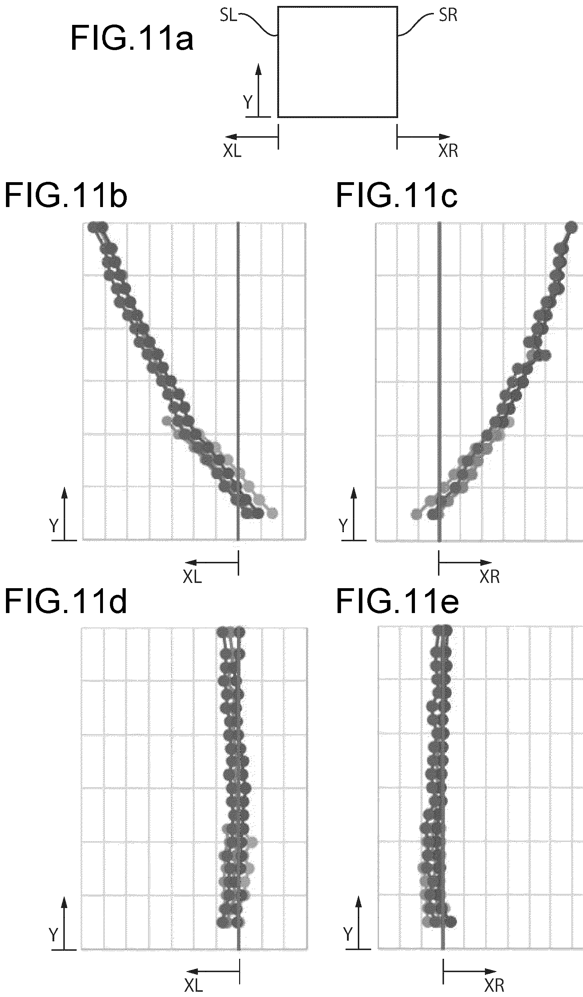

Fig. 11 is explanatory diagrams showing the results of improvement of the accuracy. Fig. 11(a) schematically illustrates a shaped object. AY axis was defined upward from a lower face of the shaped object, and displacements XL and XR occurring in side faces SL and SR in respective locations were measured.

Fig. 11(b) and Fig. 11(c) show displacements occurring in the shaped object when the method of the embodiment is not employed or more specifically when the shape data of the shaped object is directly used in the formation process and the cutting process. Fig. 11(b) shows the displacement XL occurring in the left side face SL, and Fig. 11(c) shows the displacement XR occurring in the right side face SR. A plurality of measurement results are the results of measurement at a plurality of locations along a depth direction of the shaped object. As shown in Fig. 11(b) and Fig. 11(c), the upper location has the larger displacements XL and XR in respective outward directions in both the left side face SL and the right side face SR.

Fig. 11(d) and Fig. 11(e) show displacements occurring in the shaped object when the method of the embodiment is employed or more specifically when the cutting data is generated with reflection of displacements by prediction of deformations. Fig. 11(d) shows the displacement XL occurring in the left side face SL, and Fig. 11(e) shows the displacement XR occurring in the right side face SR. As shown in Fig. 11(d) and Fig. 11(e), both the left side face SL and the right side face SR have smaller displacements in the shape data at any locations.

These results show that the three-dimensional shaping apparatus 10 of the embodiment and the shaping method based thereon improves the accuracy of the shaped object.

The three-dimensional shaping apparatus 10 described in the embodiment and the shaping method based thereon set the cutting height range for the finishing cutting based on the temperature of the base plate and the like, so as to improve the surface quality of an end face of a shaped object.

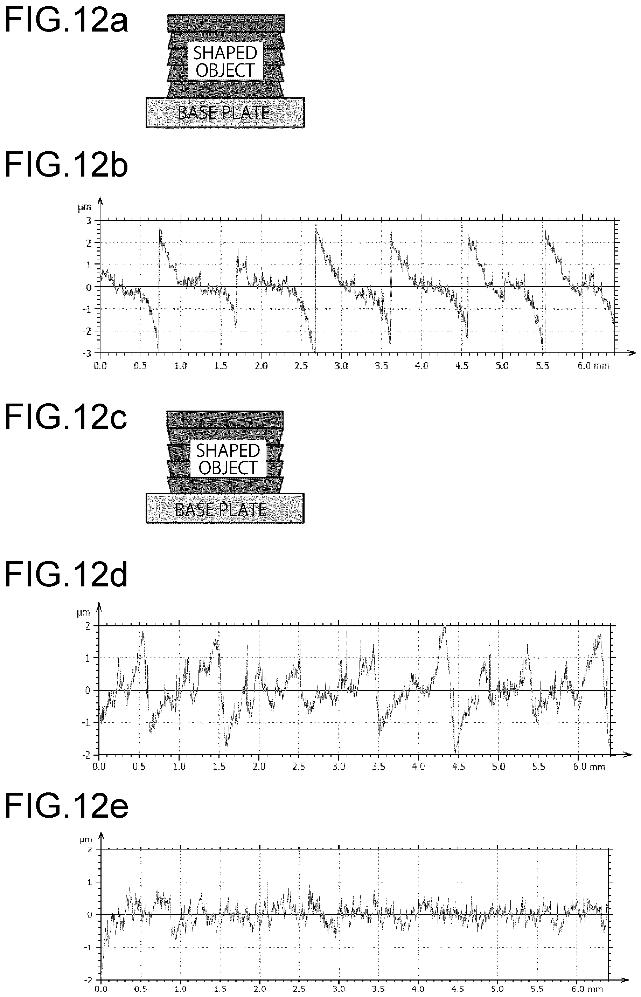

Fig. 12 is explanatory diagrams showing the results of improvement of the surface quality. Fig. 12(a) schematically illustrates a shaped object where a deformation mainly in the contraction tendency occurs. As described previously, the end face is a stack of downward trapezoids and has unevenness. Fig. 12(b) is a graph showing the state of this end face. The abscissa of the graph shows the position in a height direction from the base plate as the basis, and the ordinate shows displacements of the end face in an outward direction as positive values and displacements of the end face in an inward direction as negative values. As shown in Fig. 12(b), the position of the end face has the displacement changing from the outward direction to the inward direction at the upper location, discontinuously changes to the displacement in the outward direction at a certain location and then gradually changes to the displacement in the inward direction. Fig. 12(b) is accordingly a graph representing the end face shape of Fig. 12(a). In this example, the roughness of the side face is calculated as Ra of 1.00 µm.

Fig. 12(c) schematically illustrates a shaped object where a deformation mainly in the expansion tendency occurs. As described previously, the end face is a stack of upward trapezoids and has unevenness. Fig. 12(d) is a graph showing the state of this end face. As shown in Fig. 12(d), the position of the end face has the displacement changing from the inward direction to the outward direction at the upper location, discontinuously changes to the displacement in the inward direction at a certain location and then gradually changes to the displacement in the outward direction. Fig. 12(d) is accordingly a graph representing the end face of Fig. 12(c). In this example, the roughness of the side face is calculated as Ra of 0.48 µm.

Fig. 12(e) shows the results of the finishing cutting with setting of the cutting height range as described in the embodiment. Compared with the results of Fig. 12(b) and Fig. 12(d), there is a significantly smaller variation in displacement in Fig. 12(e). This proves that the side face of the shaped object has the less unevenness and the improved surface quality in the example of Fig. 12(e). In the example of Fig. 12(e), the roughness of the side face is calculated as Ra of 0.24 µm.

As described above, the configuration of the embodiment sets the cutting height range for the finishing cutting, based on the temperature of the base plate and the like, so as to improve the surface quality of an end face of a shaped object.

The three-dimensional shaping apparatus may not necessarily be provided with all the variety of features described in the embodiment, and these features may be partly omitted or combined appropriately. The present disclosure may not be limited to the embodiment but may be configured as a variety of modifications.

The present disclosure is not limited to the powder bed system as described in the embodiment but is applicable to a variety of shaping methods that fuse powder and solidify the fused powder.

### Industrial Applicability

The present disclose is applicable to improve the shaping accuracy in three-dimensional shaping that repeats a formation process of fusing powder and solidifying the fused powder and a cutting process, so as to form a three-dimensional shaped object.

### Reference Signs list

- 10: three-dimensional shaping apparatus
- 11: laser irradiation portion
- 12: hopper
- 13: recoater
- 14: shaping table
- 15: moving mechanism
- 20: cutting portion
- 30: control device
- 31: data input unit
- 32: shaping controller
- 33: heater controller
- 34: cutting controller
- 35: stacking controller
- 40: cutting tool
- 41: cutting part
- 42: shaft
- 50: cutting data generation device
- 51: shaping database
- 52: deformation prediction module
- 53: machine learning module
- 54: cutting data generator

## Claims

1. A three-dimensional shaping apparatus configured to form a three-dimensional shaped object, the three-dimensional shaping apparatus comprising:
an input unit configured to read shape data of the shaped object;
a formation portion configured to fuse powder, to solidify the fused powder, and to form a part of the shaped object according to the shape data;
a moving mechanism configured to move the part and the shaped object relative to each other, in order to form a next part in addition to a previously formed part;
a cutting portion configured to cut the previously formed part; and
a controller configured to control the formation portion, the moving mechanism and the cutting portion, such as to repeatedly perform the formation by the formation portion and the moving mechanism and the cutting by the cutting portion and to form the shaped object, wherein
the controller predicts a deformation occurring in the part after the cutting by a stress accompanied with the formation and controls the cutting, based on cutting data that is corrected to be suitable for the shape data with the predicted deformation.

2. The three-dimensional shaping apparatus according to claim 1, further comprising:
a cutting data generator configured to predict a deformation caused by the stress by performing a simulation and to generate the cutting data with reflection of a result of the prediction on the shape data.

3. The three-dimensional shaping apparatus according to claim 2,
wherein the cutting data generator predicts a deformation in the cutting data by performing the simulation and updates the cutting data with reflection of a difference between a shape after the deformation and the shape data.

4. The three-dimensional shaping apparatus according to claim 1, further comprising:
a cutting data generator configured to predict a deformation caused by the stress, based on a database that stores data of each past shaped object and a deformation occurring by the stress in each past shaped object and to generate the cutting data with reflection of a result of the prediction on the shape data.

5. The three-dimensional shaping apparatus according to claim 1,
wherein the controller controls the cutting portion to perform the cutting with excluding a part formed by a predetermined number of formation processes repeatedly performed by the formation portion and the moving mechanism from a last formation process.

6. The three-dimensional shaping apparatus according to claim 1,
wherein the formation portion comprises a mechanism configured to: fuse the powder on the base plate where the shaped object is to be placed; to solidify the fused powder; and to form a thin layer as a part of the shaped object,
the three-dimensional shaping apparatus further comprising a heater configured to heat the base plate, wherein
the controller controls heating by the heater, such that a warpage of the base plate caused by the formation is equal to or less than a predetermined request value.

7. The three-dimensional shaping apparatus according to claim 1,
wherein the formation portion comprises a mechanism configured to: fuse the powder on the base plate where the shaped object is to be placed; to solidify the fused powder; and to form a thin layer as a part of the shaped object,
the three-dimensional shaping apparatus further comprising a heater configured to heat the base plate, wherein
the controller sets a cutting height range in a stacking direction of the thin layers, according to a set temperature of the heater and an area of the thin layer adjacent to the base plate.

8. A three-dimensional shaping method of forming a three-dimensional shaped object by a three-dimensional shaping apparatus, the three-dimensional shaping method comprising steps of:
(a) reading shape data of the shaped object;
(b) fusing powder, solidifying the fused powder, and forming a part of the shaped object according to the shape data;
(c) repeatedly performing the step (b) to form a next part in addition to a previously formed part; and
(d) cutting the previously formed part, wherein
the step (d) comprises predicting a deformation occurring in the part after the cutting by a stress accompanied with the formation and performing the cutting, based on cutting data that is corrected to be suitable for the shape data with the predicted deformation.

9. A computer program that causes a computer to generate data for cutting to be used for a three-dimensional shaping apparatus, which is configured to form a three-dimensional shaped object by repeatedly performing formation of a part of the shaped object, which fuses powder and solidifies the fused powder, and cutting of a previously formed part, the computer program causing the computer to perform:
a function of reading shape data of the shaped object; and
a function of predicting a deformation occurring in the part after the cutting by a stress accompanied with the formation and of generating cutting data that is corrected to be suitable for the shape data with the predicted deformation.

10. A computer program that causes a computer to generate data for cutting to be used for a three-dimensional shaping apparatus, which is configured to form a three-dimensional shaped object by repeatedly performing formation of a part of the shaped object, which fuses powder and solidifies the fused powder, and cutting of a previously formed part, the computer program causing the computer to perform:
a function of reading shape data of the shaped object; and
a function of predicting a deformation caused by a stress accompanied with the formation, based on a database that stores data of each past shaped object and a deformation occurring by the stress in each past shaped object and generating the data for cutting with reflection of a result of the prediction on the shape data.
